# EUROPÄISCHE PATENTSCHRIFT

(11) **EP 1 588 898 B1**
(45) Veröffentlichungstag und Bekanntmachung des Hinweises auf die Patenterteilung: **14.02.2007**
(21) Anmeldenummer: 04009753.7
(22) Anmeldetag: 23.04.2004
(51) Int. Cl.: B60R 11/02

(54) **Fahrzeug-Bildschirmeinrichtung**
Vehicle picture display device
Dispositif de visualisation de véhicule

(43) Veröffentlichungstag der Anmeldung: 26.10.2005
(73) Patentinhaber: Harman Becker Automotive Systems GmbH, 76307 Karlsbad (DE)
(72) Erfinder: Irons, Curt, Greenwood, Indiana 46142 (US); Ellis, David J., New Palestine In. 46163 (US); Wöhrle, Philipp, 78098 Triberg (DE); Latham-Brown, Ernie, Bloomington, IN 47408 (US)
(74) Vertreter: Grünecker, Kinkeldey, Stockmair & Schwanhäusser Anwaltssozietät

(56) Entgegenhaltungen:
- EP-A- 1 260 412
- DE-A- 4 317 385
- FR-A- 2 787 403

## Beschreibung

Die vorliegende Erfindung betrifft eine Fahrzeug-Bildschirmeinrichtung, welche an einem Fahrzeug anbringbar ist.

Aus der Praxis sind gattungsgemäße Fahrzeug-Bildschirmeinrichtungen bekannt, die ein mobiles TV-Gerät darstellen und mittels einer Befestigungsstruktur im Inneren eines Fahrzeuges, z.B. an einer Kopfstütze, lösbar anbringbar sind. Die Bildschirmeinrichtung wird dabei über das Fahrzeug mit Bildschirmdaten versorgt. Bei diesen Fahrzeug-Bildschirmeinrichtungen ist im mobilen Betrieb sowie im fahrzeuggebundenen Betrieb eine verbesserte Handhabbarkeit wünschenswert.

Der vorliegenden Erfindung liegt daher die Aufgabe zugrunde, eine Fahrzeug-Bildschirmeinrichtung zu schaffen, bei welcher auf möglichst einfache Weise die Handhabbarkeit im mobilen Betrieb sowie im fahrzeuggebundenen Betrieb verbessert ist.

Die Aufgabe wird erfindungsgemäß gelöst mit einer Fahrzeug-Bildschirmeinrichtung mit den Merkmalen des Anspruches 1.

Die erfindungsgemäße Fahrzeug-Bildschirmeinrichtung ist je nach Einsatzbedarf baukastenartig aufbaubar. Hierdurch ist die Fahrzeug-Bildschirmeinrichtung sowohl für den mobilen Betrieb als auch für den fahrzeuggebundenen Betrieb jeweils angepasst und jeweils gut handhabbar. Befindet sich das Bildschirmmodul in der an das Sammelanschlussmodul gekoppelten Stellung, ist die Fahrzeug-Bildschirmeinrichtung ais ein vom Fahrzeug separates Bildanzeigegerät nutzbar und verfügt über die hierfür erforderlichen Funktionen. Die Funktionen des Bildschirmmoduls werden dabei durch das Sammelanschlussmodul entsprechend ergänzt. Befindet sich das Bildschirmmodul in der an das Haltemodul gekoppelten Stellung, hat die Fahrzeug-Bildschirmeinrichtung die für den fahrzeuggebundenen Betrieb erforderlichen Funktionen. Dabei ergänzt das Haltemodul die Funktionen des Bildschirmmoduls, um die im fahrzeuggebundenen Betrieb gewünschten Bildschirmfunktionen zu realisieren. Ferner verleiht das Haltemodul der Fahrzeug-Bildschirmeinrichtung die für den fahrzeuggebundenen Betrieb erforderlichen Haltefunktionen.

Besonders günstig kann das Sammelanschlussmodul als Antennemodul ausgebildet sein. Dadurch kann die Fahrzeug-Bildschirmeinrichtung separat vom Fahrzeug als ein mobiles TV-Gerät genutzt werden.

Besonders vorteilhaft kann das Sammelanschlussmodul einen Sammelstecker und eine Anzahl separater Anschlüsse aufweisen, welche ausgehend von dem Sammelstecker vereinzelt sind, wobei der Sammelstecker an einen Gegenstecker des Bildschirmmoduls koppelbar ist. Auf diese Weise kann die gleiche Art von Schnittstelle zwischen dem Bildschirmmodul und dem Sammelanschlussmodul sowie dem Bildschirmmodul und dem Haltemodul verwendet werden und die Fahrzeug-Bildschirmeinrichtung erhält für den mobilen Betrieb gut nutzbare, vereinzelte Anschlüsse.

Bevorzugt kann das Bildschirmmodul mit Hilfe des Haltemoduls hängend an einer Fahrzeugstruktur anbringbar sein. Hierdurch kann die Fahrzeug-Bildschirmeinrichtung in einer gut sichtbaren Position am Fahrzeug angebracht werden, beispielsweise an einer Dachstruktur.

Günstigerweise kann das Haltemodul eine schienenartige Haltestruktur aufweisen, welche in einen Eingriff mit dem Bildschirmmodul bringbar ist, wobei das Bildschirmmodul an der Haltestruktur gehalten wird. Damit wird die Haltefunktion von der schienenartigen Haltestruktur übemommen und die übrige Kopplung zwischen Bildschirmmodul und Haltemodul kräfteentlastet. Der Eingriff lässt sich durch das Einschieben über die Schienen einfach bewerkstelligen.

Besonders vorteilhaft kann das Haltemodul und/oder das Bildschirmmodul eine Verriegelungsvorrichtung aufweisen, mit welcher das Haltemodul und das Bildschirmmodul in einer Koppelstellung verriegelbar sind. Auf diese Weise wird ein unbeabsichtigtes Lösen von Haltemodul und Bildschirmmodul vermieden und das Haltemodul und das Bildschirmmodul werden sicher in der Koppelstellung gehalten.

Besonders bevorzugt können das Haltemodul und das Bildschirmmodul mit Hilfe der Verriegelungsvorrichtung von einer Ausgangslage in die endgültige Koppelstellung bewegbar sein. Dadurch wird das Erreichen der endgültigen Koppelstellung sichergestellt und das Koppeln von Haltemodul und Bildschirmmodul für einen Bediener erleichtert.

Besonders günstig können das Haltemodul und das Bildschirmmodul mit Hilfe der Verriegelungsvorrichtung von der Koppelstellung in eine Ausgangslage bewegbar sein, in welcher das Haltemodul und das Bildschirmmodul voneinander lösbar sind. Hiermit wird das Lösen von Haltemodul und Bildschirmmodul für einen Bediener erleichtert.

Vorteilhafterweise kann ein Bedienhebel der Verriegelungsvorrichtung in einer eingerückten Stellung eine Außenkontur des Bildschirmmoduls und/oder des Haltemoduls integral fortsetzen. Auf diese Weise ist der Bedienhebel weniger leicht versehentlich aus seiner eingerückten Stellung wegbewegbar, wobei das ungewollte Wegbewegen ein ungewolltes Lösen von Bildschirmmodul und Haltemodul zur Folge hätte. Ferner ist auf diese Weise optisch und haptisch leicht erkennbar, ob sich der Bedienhebel in seiner eingerückten Stellung, und somit in seiner Endstellung, befindet oder nicht.

Besonders bevorzugt kann die Verriegelungsvorrichtung einen Bedienhebel, einen Getriebemechanismus und wenigstens einen Verriegelungshaken aufweisen, wobei eine Schwenkbewegung des Bedienhebels durch den Getriebemechanismus in eine schwenkende und translatorische Bewegung des Verriegelungshakens umgesetzt wird. Damit wird eine einfache Bedienbewegung in eine komplexere Bewegung des Verriegelungshakens umgewandelt.

Besonders günstig kann das mit dem Verriegelungshaken lösbar in Eingriff bringbare Modul eine Zieh- und eine Drück-Eingriffsstruktur aufweisen, wobei derVerriegelungshaken mit der Zieh-Eingriffsstruktur ziehend und mit der Drück-Eingriffsstruktur drückend in Eingriff bringbar ist. Hierdurch wird über ein Bewegen des Verriegelungshakens, das durch ein Betätigen des Bedienhebels erfolgt, ein Aneinanderziehen von Bildschirmmodul und Haltemodul oder ein Auseinanderdrücken von Bildschirmmodul und Haltemodul erzielt.

Bevorzugt kann das Bildschirmmodul eine Basiseinheit und eine daran über ein Gelenk schwenkbar angebrachte Anzeigeeinheit aufweisen, wobei an einer dem Gelenk gegenüberliegenden Stirnseite eine Koppelstelle zum Koppeln des Bildschirmmoduls mit dem Haltemodul oder dem Sammelanschlussmodul ausgebildet ist. Damit wird eine für ein koppelndes Zusammenschieben von Bildschirmmodul und Haltemodul oder Sammelanschlussmodul gut geeignete Seite verwendet.

In einer Weiterbildung der Erfindung kann das Haltemodul mit einer externen Antenne verbunden sein. Damit können Antennensignale der externen Antenne über das Haltemodul dem Bildschirmmodul zugeleitet werden.

Besonders bevorzugt kann das Sammelanschlussmodul wenigstens einen Akkumulator aufweisen. Der Akkumulator dient im mobilen Betrieb der Fahrzeug-Bildschirmeinrichtung als Stromversorgungsquelle.

Besonders bevorzugt kann das Sammelanschlussmodul wenigstens einen Lautsprecher aufweisen. Mit dem Lautsprecher werden die akustischen Wiedergabemöglichkeiten der Fahrzeug-Bildschirmeinrichtung im mobilen Betrieb verbessert.

Ausführungsformen der vorliegenden Erfindung sind in der Zeichnung gezeigt und werden nachfolgend erläutert. Es zeigen:
- Figur 1: eine perspektivische Ansicht auf ein Bildschirmmodul und ein Sammelanschlussmodul einer ersten Ausführungsform der erfindungsgemäßen Fahrzeug-Bildschirmeinrichtung,
- Figur 2: eine perspektivische Ansicht des Bildschirmmoduls und des Sammelanschlussmoduls aus Figur 1 in zusammengestecktem Zustand, wobei Antennen des das Sammelanschlussmoduls angesteckt sind,
- Figur 3: eine perspektivische Ansicht des Bildschirmmoduls in an einem Haltemodul befestigtem Zustand,
- Figur 4: eine perspektivische Ansicht der Fahrzeug-Bildschirmeinrichtung aus Figur 3 mit aufgeklappter Anzeigeeinheit,
- Figur 5: eine ausschnittsweise perspektivische Ansicht des Haltemoduls mit ausgeschwenktem Bedienhebel,
- Figur 6: eine ausschnittsweise perspektivische Ansicht auf das Bildschirmmodul und das Haltemodul in einer Koppelstellung, wobei der Bedienhebel eingeschwenkt ist,
- Figur 7: eine ausschnittsweise perspektivische Ansicht auf einen Innenbereich des Bildschirmmoduls und des Haltemoduls in einer Ausgangsstellung, wobei sich der Bedienhebel in ausgeschwenktem Zustand befindet,
- Figur 8: eine Ansicht wie in Figur 7, wobei sich das Bildschirmmodul und das Haltemodul jedoch in der Koppelstellung befinden und der Bedienhebel sich in einer eingeschwenkten Stellung befindet,
- Figur 9: eine perspektivische Ansicht des Bildschirmmoduls in zusammengestecktem Zustand mit einem Sammelanschlussmodul einer zweiten Ausführungsform der Erfindung und
- Figur 10: eine perspektivische Ansicht des Bildschirmmoduls in zusammengestecktem Zustand mit einem Sammelanschlussmodul einer dritten Ausführungsform der Erfindung.

Erfindungsgemäß weist eine Fahrzeug-Bildschirmeinrichtung baukastenartig ein Bildschirmmodul, ein an einem Fahrzeug befestigbares Haltemodul und wenigstens ein Sammelanschlussmodul auf.

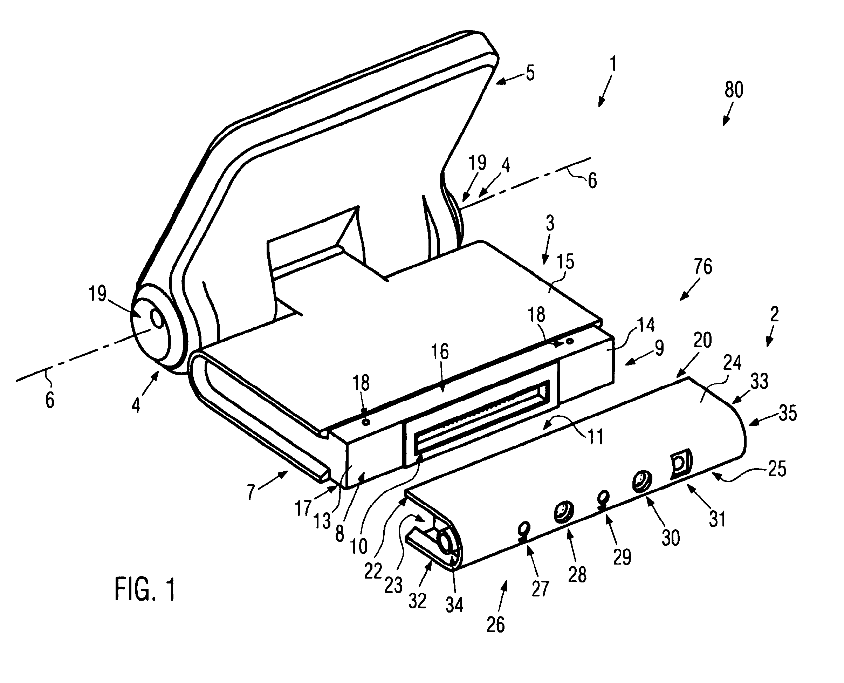

Ein Bildschirmmodul 1 und ein Sammelanschlussmodul 2 einer Fahrzeug-Bildschirmeinrichtung 80 einer ersten Ausführungsform der Erfindung sind in Figur 1 in voneinander separiertem Zustand gezeigt. Mit dem Sammelanschlussmodul 2 werden dem Bildschirmmodul 1 Bildschirmsignale zugeleitet und somit zugänglich gemacht. Dies können Audio- und/oder Videosignale separater Geräte und/oder Antennensignale separater Antennen sein. Das Verarbeiten der Bildschirmsignale und das Erzeugen eines Bildes erfolgt in dem Bildschirmmodul 1.

In dieser Ausführungsform der Erfindung ist das Sammelanschlussmodul 2 als ein Antennenmodul ausgebildet. Auf diese Weise ist die Fahrzeug-Bildschirmeinrichtung als ein eigenständiges TV-Gerät betreibbar. Dabei weist das Bildschirmmodul 1 und/oder das Antennenmodul 2 wenigstens eine Batterie auf.

Das Bildschirmmodul 1 weist eine Basiseinheit 3 auf, an der über ein Gelenk 4 eine Anzeigeeinheit 5 um eine Achse 6 schwenkbar angebracht ist. In der Ansicht gemäß Figur 1 befindet sich die Anzeigeeinheit 5 in aufgeklapptem Zustand und das Bildschirmmodul 1 steht auf einer nicht gezeigten Unterlage, wobei eine Unterseite 7 der Basiseinheit 3 als Standfläche dient.

An einer dem Gelenk 4 gegenüberliegenden Stirnseite 8 der Basiseinheit 3 ist eine Koppelstelle 9 zum Koppeln des Bildschirmmoduls 1 mit einem Haltemodul oder dem Antennenmodul 2 ausgebildet. An der Stirnseite 8 ist ein erster Sammelstecker 10 angeordnet, der als Gegenstecker zu einem zweiten Sammelstecker 11 dient, der an dem Antennenmodul 2 vorgesehen ist, oder als Gegenstecker zu einem dritten Sammelstecker, der an dem Haltemodul vorgesehen ist. Der erste Sammelstecker 10 und der zweite Sammelstecker 11 sowie der erste Sammelstecker 10 und der dritte Sammelstecker bilden jeweils eine lösbar zusammensteckbare Schnittstelle mit einer Vielzahl von Steckkontakten, unter anderem zum Übertragen von Bildschirmsignalen, wie z.B. Antennensignalen oder Videosignalen anderer Geräte, an das Bildschirmmodul 1. Ferner kann das Bildschirmmodul 1 über diese Schnittstellen mit Energie versorgt werden.

Der erste Sammelstecker 10 ist etwa mittig an der Stirnseite 8 ausgebildet. Sich an den ersten Sammelstecker 10 seitlich anschließende Seitenbereiche 13, 14 sind gegenüber dem ersten Sammelstecker 10 in Richtung zu dem Gelenk 4 zurückversetzt ausgebildet. Ausgehend von der Stirnseite 8 schließen sich an einer Oberseite 15 der Basiseinheit 3 und der Unterseite 7 jeweils Aufsteckzonen 16, 17 in Richtung zu dem Gelenk 4 an. Die Aufsteckzonen 16, 17 bilden jeweils eine die Höhe der Basiseinheit 3 verringemde Abstufung der Basiseinheit 3. Die Aufsteckzonen 16, 17 weisen Rastprofile 18 auf.

Das Bildschirmmodul dieser Ausführungsform der Erfindung kann sowohl analoge als auch digitale TV-Signale im Sinne eines digital terrestrischen Empfängers (DVB-T) verarbeiten. Es ist ein Hybridempfänger.

Im Bereich des Gelenkes 4 weist das Bildschirmmodul 1 jeweils seitlich einen Drehknopf 19 auf. Die Drehknöpfe 19 sind als Inkrementgeber ausgebildet und mit einem Drucktaster ausgestattet. Die Drehknöpfe 19 sind um die Achse 6 drehbar.

Die Koppelstelle 9 des Bildschirmmoduls 1 an der Stirnseite 8 des Bildschirmmoduls 1 umfasst den ersten Sammelstecker 10, die zurückversetzten Seitenbereiche 13, 14 und die Aufsteckzonen 16, 17. An einer Ansteckstirnseite 20 weist das Antennenmodul 2 eine zu der Koppelstelle 9 korrespondierend ausgebildete Gegenkoppelstelle 21 auf. Die Gegenkoppelstelle 21 weist außer dem zweiten Sammelstecker 11 auch Aufsteckfortsätze 22, 23 auf.

Beim Zusammenstecken von Bildschirmmodul 1 und Antennenmodul 2 gleiten die Aufsteckfortsätze 22, 23 auf die Aufsteckzonen 16, 17 auf, wobei Gegenrastprofile der Aufsteckfortsätze 22, 23 mit den Rastprofilen 18 des Bildschirmmoduls 1 rastend in Eingriff gelangen. Der obere Aufsteckfortsatz 22 steht von einer Oberseite 24 des Antennenmoduls über den zweiten Sammelstecker 11 hinaus vor und der untere Aufsteckfortsatz 23 analog von einer Unterseite 25 des Antennenmoduls 2. Beim Zusammenstecken von Bildschirmmodul 1 und Antennenmodul 2 gelangen ferner der erste und zweite Sammelstecker 10, 11 miteinander in Eingriff.

An einer der Ansteckstirnseite 20 gegenüberliegenden Rückseite 26 weist das Antennenmodul 2 eine Anzahl verschiedener Anschlüsse 27, 28, 29, 30, 31 auf. Darunter befindet sich ein Anschluss zum Energie einspeisen sowie Ein- und Ausgänge für Video- und/oder Audiosignale. An Seitenbereichen 32, 33 weist das Antennenmodul 2 Antennenanschlüsse 34, 35 auf. Auf die Antennenanschlüsse 34, 35 sind Antennen des Antennenmoduls 2 aufsteckbar, die in Figur 1 nicht gezeigt sind. Alternativ kann an jeden Antennenanschluss 34, 35 eine externe Antenne angeschlossen werden. Somit hat das Sammelanschlussmodul eine Sammelfunktion und eine Durchleitefunktion.

Die Anschlüsse 27 bis 31 an der Rückseite 26 des Antennenmoduls 2 und die Antennenanschlüsse 34, 35 sind separate Anschlüsse. Im Antennenmodul 2 werden die Steckkontakte des zweiten Sammelsteckers 11 zu den separaten Anschlüssen 27 bis 31, 34, 35 hin vereinzelt.

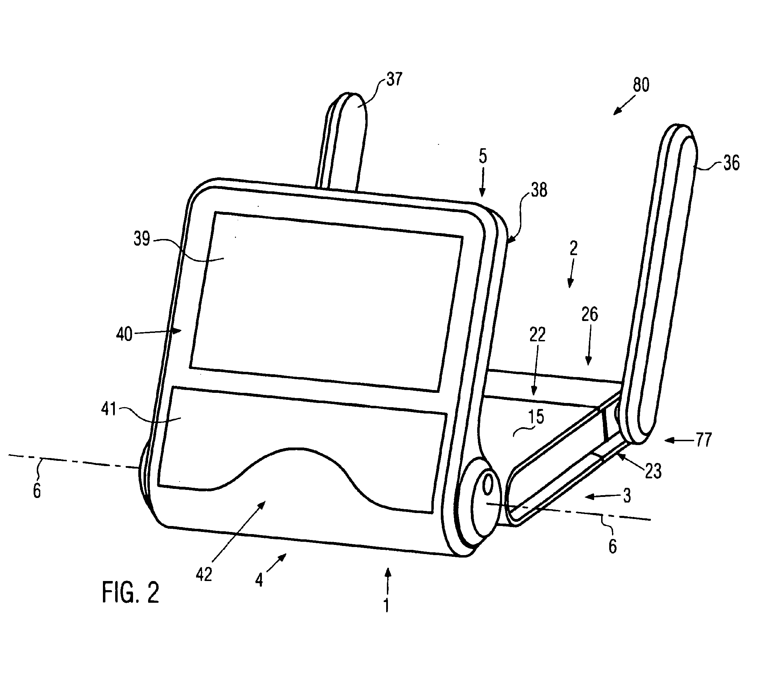

Figur 2 zeigt das Bildschirmmodul 1 und das Antennenmodul 2 in gekoppelter Stellung 77. Ferner sind die Antennen 36, 37 des Antennenmoduls 2 über die Antennenanschlüsse 34, 35 an das Antennenmodul 2 angesteckt und bajonettartig gesichert. Dabei sind die Antennen 36, 37 schwenkbar gelagert und etwa in einer 20°-Stellung von dem Antennenmodul 2 abnehmbar. In der gekoppelten Stellung 77 ist die Einheit aus Bildschirmmodul 1 und Antennenmodul 2 mobil als TV-Gerät einsetzbar.

Die Antennensignale der Antennen 36, 37 werden über die Antennenanschlüsse 34, 35 und den zweiten Sammelstecker 11 dem ersten Sammelstecker 10 des Bildschirmmoduls zugeleitet. Aus diesen Bildschirmsignalen erzeugt das Bildschirmmodul 1 ein Bild, das mit einem Bildschirm 39 dargestellt wird, welche an einer Außenseite 40 der Anzeigeeinheit 5 angeordnet ist. Die Außenseite 40 liegt einer Anklappseite 38 der Anzeigeeinheit 5 gegenüber, welche in Anlage an die Oberseite 15 der Basiseinheit 3 gelangt, wenn das Bildschirmmodul 1 zusammengeklappt wird. An der Außenseite 40 sind ferner eine Lautsprechereinheit 41 und eine Infraroteinheit 42 vorgesehen. Über die Infraroteinheit 42 ist die Fahrzeug-Bildschirmeinrichtung 80 fernbedienbar.

In dieser Ausführungsform der Erfindung sind die Antennen 36, 37 aktiv, das heißt, sie weisen einen eingebauten Verstärker auf, und werden über die Antennenanschlüsse 34, 35 versorgt. Somit besteht auch die Möglichkeit einer Phantomspeisung von externen Antennen.

Das Antennenmodul 2 ist die Umfangskontur der Basiseinheit 3 fluchtend fortsetzend ausgebildet. Dies gilt insbesondere bei abgenommenen Antennen 36, 37 in einer Richtung quer zu der Achse 6 und bei angesteckten und eingeklappten Antennen 36, 37 sowohl in einer Richtung quer als auch in einer Richtung parallel zu der Achse 6.

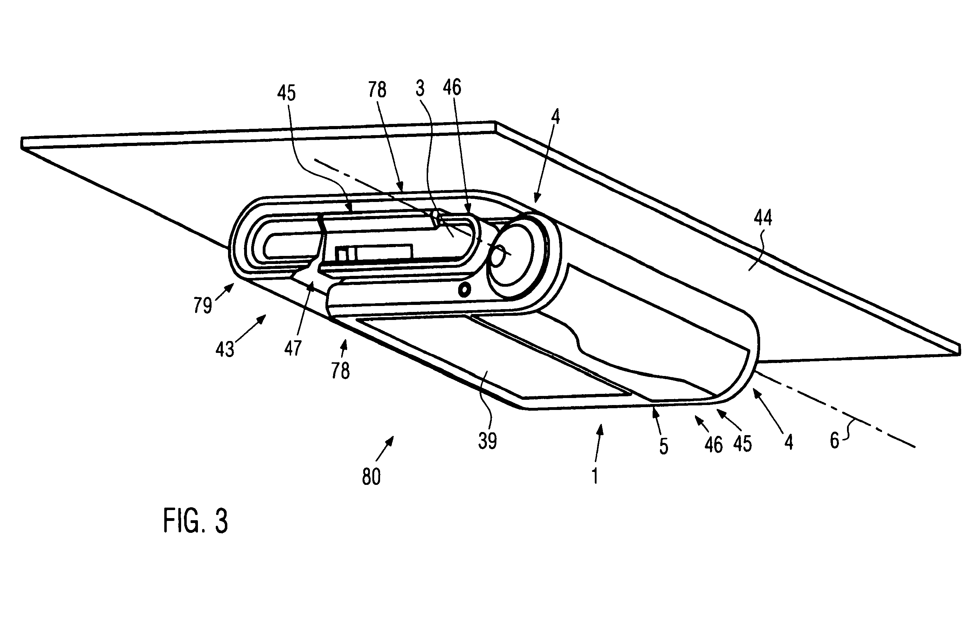

Figur 3 zeigt das Bildschirmmodul 1 in einer an das Haltemodul 43 der Fahrzeug-Bildschirmeinrichtung 80 gekoppelten Stellung 58, in welcher das Bildschirmmodul 1 über das Haltemodul 43 mit Bildschirmsignalen versorgt wird. Die Bildschirmsignale können von einer externen Antenne oder anderen Geräten des Fahrzeugs stammen. Diese Bildsignale werden von dem Bildschirmmodul 1 in ein Bild umgewandelt, das mittels des Bildschirmes 39 angezeigt wird.

Das Haltemodul 43 ist an einer ausschnittsweise gezeigten Fahrzeugstruktur lösbar befestigt, welche in dieser Ausführungsform der Erfindung eine Dachstruktur 44 ist. Dementsprechend ist das Bildschirmmodul 1 mit Hilfe des Haltemoduls 43 hängend an der Fahrzeugstruktur angebracht.

In einer alternativen Ausführungsform der Erfindung kann das Haltemodul beispielsweise auch an einem Mitteltunnel eines Fahrzeugs angebracht sein.

Die Fahrzeug-Bildschirmeinrichtung weist eine Konvertierungsvorrichtung auf, mit welcher die Ausrichtung des von dem Bildschirmmodul 1 erzeugten Bildes an die Montagelage des Bildschirmmoduls 1 anpassbar ist. Auf diese Weise ist das von dem Bildschirm 39 angezeigte Bild sowohl in hängender Montagelage als auch in einer Montagelage, in welcher das Bildschirmmodul 1 mit der Basiseinheit 3 nach unten angeordnet ist, für einen Betrachter richtig herum angezeigt.

Das Haltemodul 43 weist eine schienenartige Haltestruktur 45 auf, welche mit an beiden Seiten der Basiseinheit 3 vorstehenden Rändern 46 in Eingriff bringbar sind. Zum Ankoppeln des Basismoduls 1 an das Haltemodul 43 werden die im Bereich der Unterseite 7 der Basiseinheit 3 seitlich hervorstehenden Ränder 46 jeweils in die schienenartige Struktur 45 eingefädelt. Dabei wird die Bewegung des Bildschirmmoduls 1 in die Koppelstellung von der schienenartigen Haltestruktur 45 geführt. Die schienenartige Haltestruktur 45 hält das Bildschirmmodul 1 gegenüber quer zu der Längsrichtung der schienenartigen Struktur 45, also gegenüber quer zu der Einführrichtung wirkenden Kräften, insbesondere gegenüber einer auf das Bildschirmmodul 1 wirkenden Gravitationskraft.

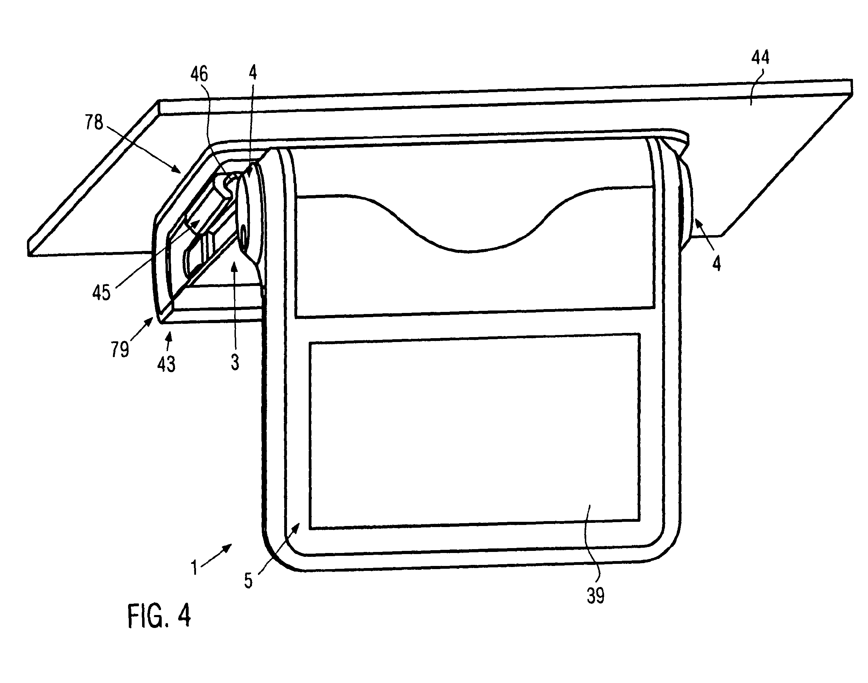

Figur 4 zeigt das Bildschirmmodul 1 in an das Haltemodul 43 gekoppelter Stellung 58 mit aufgeklappter Anzeigeeinheit 5. In dieser Darstellung ist gut zu entnehmen, wie die schienenartige Haltestruktur 45 die seitlich vorstehenden Ränder 46 umgreift.

Das Haltemodul 43 weist an einer Kontaktstirnseite 47 den dritten Sammelstecker 12 auf und ist wenigstens abschnittsweise zu der Koppelstelle 9 des Bildschirmmoduls 1 korrespondierend ausgebildet.

Darüber hinaus weist das Haltemodul 43 eine Verriegelungsvorrichtung 48 auf. Mit der Verriegelungsvorrichtung 48 ist das Bildschirmmodul 1 von einer Ausgangslage in eine endgültige Koppelstellung bewegbar und in dieser Koppelstellung verriegelbar. Außerdem ist das Bildschirmmodul 1 mit Hilfe der Verriegelungsvorrichtung 48 auch von der Koppelstellung 58 zurück in die Ausgangslage bewegbar, in welcher das Bildschirmmodul 1 vom Haltemodul 43 lösbar ist.

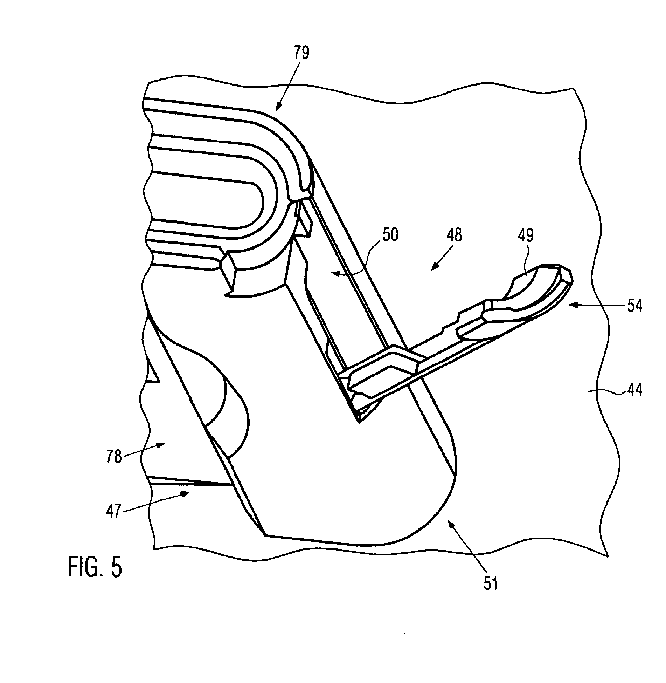

Wie in Figur 5 gezeigt ist, weist die Verriegelungsvorrichtung 48 einen Bedienhebel 49 auf, welcher in einer Ausnehmung 50 des Haltemoduls 43 schwenkbar gelagert ist. Die Ausnehmung 50 befindet sich an einer Hinterseite 51 des Haltemoduls 43 und liegt der Kontaktstirnseite 47 gegenüber.

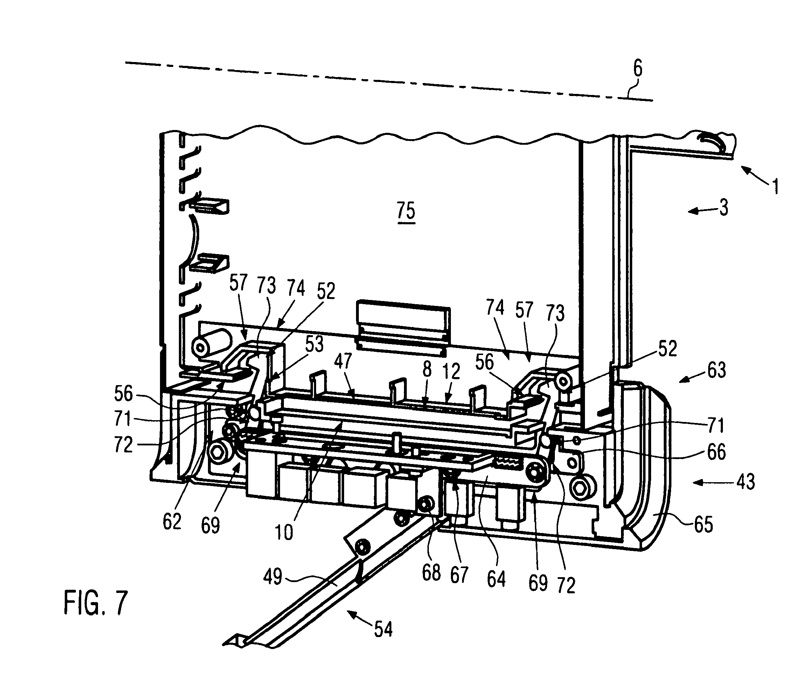

Befindet sich der Bedienhebel 49 in ausgeschwenkter Lage 54, wie in Figur 5 gezeigt, wird das Bildschirmmodul 1 in die Haltestruktur 45 eingefädelt und in die Ausgangslage gebracht, in welcher Verriegelungshaken 52 der Verriegelungsvorrichtung 48 in Eingriffsinnenbereiche 53 der Basiseinheit 3 gelangen. In der Ausgangslage 63 besteht noch ein Abstand zwischen der Stirnseite 8 der Basiseinheit 3 und der Kontaktstirnseite 47 des Haltemoduls 43, wie Figur 7 zu entnehmen ist.

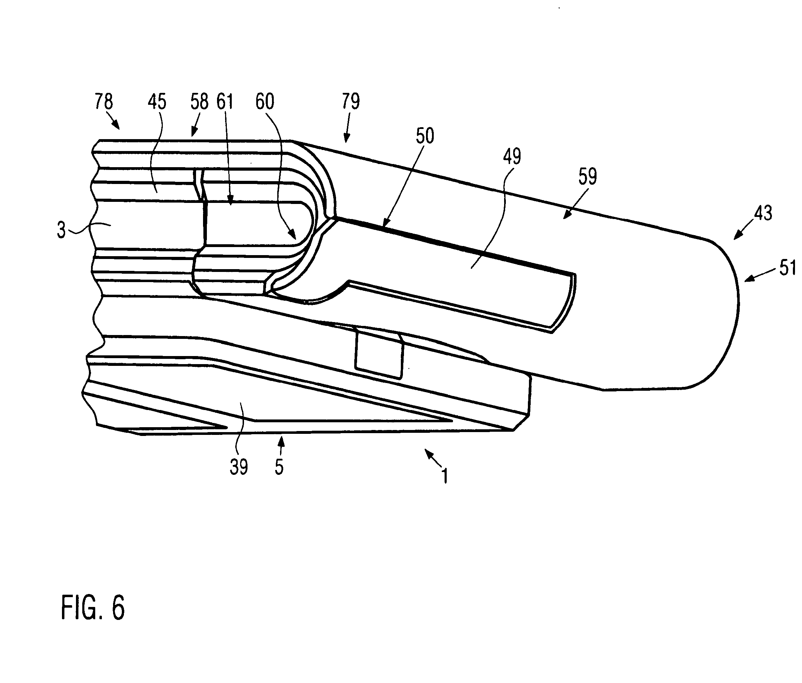

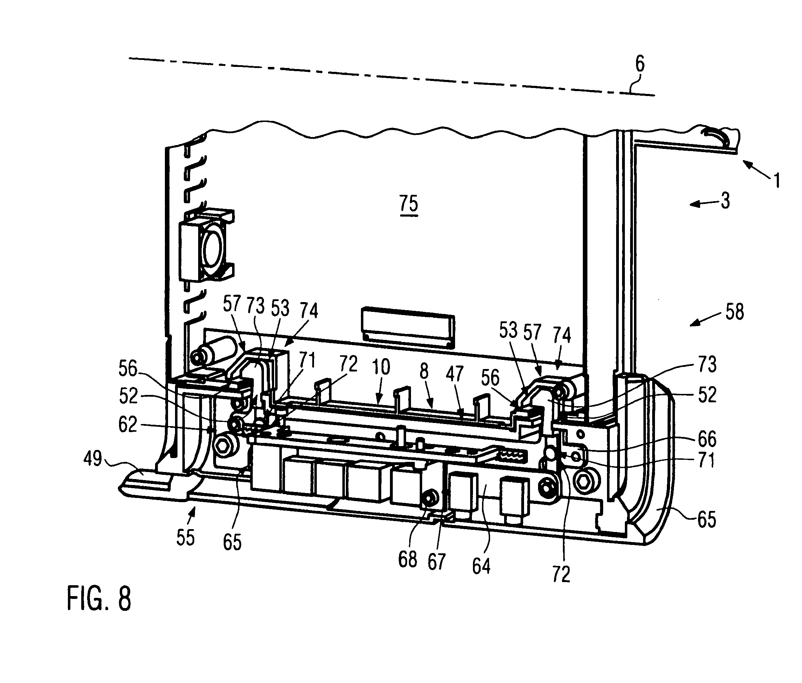

Durch Schwenken des Bedienhebels 49 von der ausgeschwenkten Lage 54 in die in Figur 6 und 8 gezeigte eingeschwenkte Lage 55 gelangen die Verriegelungshaken 52 mit Zieh-Eingriffsstrukturen 56 der Basiseinheit 3 hintergreifend in Eingriff und werden in Richtung zu der Kontaktstirnseite 47 zurückgezogen. Auf diese Weise wird das Bildschirmmodul 1 an die Kontaktstirnseite 47 heran in die endgültige Koppelstellung 58 gezogen. Weil die Verriegelungshaken 52 hintergreifend mit der Zieh-Eingriffsstruktur 56 in Eingriff bleiben, sind das Bildschirmmodul 1 und das Haltemodul 43 gleichzeitig in der endgültigen Koppelstellung 58 verriegelt.

In der eingeschwenkten Lage 55 ist der Bedienhebel 49 in die Ausnehmung 50 vollständig eingerückt und setzt eine Außenkontur 59 des Haltemoduls 43 an dessen Hinterseite 51 integral fort, wie in Figur 6 gezeigt. Der Bedienhebel 49 weist einen Endbereich 60 auf, der von einem Seitenabschnitt 61 des Haltemoduls 43 aus mit den Händen durch einen Bediener greifbar ist. Der Seitenabschnitt 61 ist ein seitlicher Verbindungsbereich zwischen der Hinterseite 51 und der Kontaktstirnseite 47 des Haltemoduls 43.

Durch Bewegen des Bedienhebels 49 von der eingeschwenkten Lage 55 in die ausgeschwenkte Lage 54, wie sie in Figur 5 dargestellt ist, werden die Verriegelungshaken 52 von der Kontaktstirnseite 47 wegbewegt und stoßen an eine Drück-Eingriffsstruktur 57 der Basiseinheit 3. Durch das Weiterbewegen des Bedienhebels 49 wird somit das Bildschirmmodul 1 von der Koppelstellung 58 in die Ausgangsstellung 63 gedrückt, wie in Figur 7 gezeigt. Dabei gelangen die Verriegelungshaken 52 auch in eine Stellung, in welcher sie die Zieh-Eingriffsstruktur 56 nicht mehr hintergreifen und das Bildschirmmodul 1 von dem Haltemodul 43 lösbar ist. Von der Ausgangsstellung wird das Bildschirmmodul 1 aus der Haltestruktur 45 herausgezogen und ist nun von dem Haltemodul 43 separiert.

Die Verriegelungsvorrichtung 48 weist einen in den Figuren 7 und 8 gezeigten Getriebemechanismus 62 auf. Mit dem Getriebemechanismus 62 wird die Schwenkbewegung des Bedienhebels 49 in eine schwenkende und translatorische Bewegung der Verriegelungshaken 52 umgesetzt.

Wie der ausschnittsweise Einblick in das Innere des Haltemoduls 43 und der Basiseinheit 3 in den Figuren 7 und 8 zeigt, weist der Getriebemechanismus 62 ein bewegliches Verbindungselement 64 auf und ein an einer Gehäusestruktur 65 des Haltemoduls 43 fixiertes Führungselement 66 Das Verbindungselement 64 wird durch die schwenkende Bewegung eines zweiten Endes 67 des Bedienhebels 49 bewegt, welcher sich um ein Gelenk 68 dreht. Außenenden 69 des Verbindungselementes 64 sind gelenkig mit zweiten Enden 70 der Verriegelungshaken 52 verbunden. Die Verriegelungshaken 52 drehen sich um ein Gelenkelement 71, welche jeweils in einer Längsnut 72 des Führungselementes 66 beweglich geführt sind. Auf diese Weise führt eine halbkreisartige Bewegung des Verbindungselementes 64 zu einer zusammengesetzten Dreh- und translatorischen Bewegung der Verriegelungshaken 52.

Die beiden Eingriffsinnenbereiche 53 der Basiseinheit 3 werden jeweils im Wesentlichen durch eine wand- oder stegartige Struktur 74 gebildet. Die Zieh-Eingriffsstruktur 56 wird jeweils durch einen im Wesentlichen parallel zur Achse 6 verlaufenden Abschnitt der Struktur 74 gebildet, den ein Hakenende 73 des jeweiligen Verriegelungshakens 52 in der Ausgangslage 63 von Bildschirmmodul 1 und Haltemodul 43 noch hintergreifen kann, siehe Figur 7. Die Drück-Eingriffsstruktur 57 wird durch einen Abschnitt der Struktur 74 gebildet, welcher abschnittsweise winklig zu der Achse 6 und abschnittsweise im Wesentlichen parallel zu der Achse 6 verläuft, wobei die Drück-Eingriffsstruktur 57 näher zu einem Inneren 75 des Basismoduls 3 hin angeordnet ist als die Zieh-Eingriffsstruktur 56.

Während die Zieh- und die Drück-Eingriffsstruktur 56, 57 in dieser Ausführungsform der Erfindung zusammen ausgebildet sind, können sie in einer alternativen Ausführungsform auch getrennt ausgebildet sein.

Von der in Figur 7 gezeigten Ausgangslage 63 in die in Figur 8 gezeigte Koppelstellung 58 wird das Bildschirmmodul 1 bewegt, in dem durch die zusammengesetzte Schwenk- und translatorische Bewegung jedes der Hakenenden 73 die Zieh-Eingriffsstruktur 56 durch Schwenken hintergreift und durch die translatorische Bewegung in Richtung zu der Kontaktstirnseite 47 zieht. Von der in Figur 8 gezeigten Koppelstellung 58 gelangt das Bildschirmmodul in die in Figur 7 gezeigte Ausgangsstellung 63, indem durch den translatorischen Bewegungsanteil eines jeden der Hakenenden 73 die Drück-Eingriffsstruktur 57 und mit ihr die Basiseinheit 3 von der Kontaktstirnseite 47 weggedrückt wird und durch die gleichzeitige Schwenkbewegung jedes der Hakenenden 73 in eine die Zieh-Eingriffsstruktur 56 nicht mehr hintergreifenden Stellung gebracht wird wodurch das Bildschirmmodul 1 von dem Haltemodul 43 lösbar ist.

In Figur 7 und 8 sind auch der erste Sammelstecker 10 des Bildschirmmoduls 1 und der dritte Sammelstecker 12 des Haltemoduls 43 gezeigt. In der Darstellung von Figur 7 sind der erste und dritte Sammelstecker 10, 12 gemäß der Ausgangslage 63 voneinander beabstandet und in Figur 8 gemäß der Koppelstellung 58 miteinander in Eingriff.

Wie in Figuren 3 bis 6 gezeigt ist, weist das Haltemodul 43 einen plattenartigen Basisabschnitt 78 und einen erhabenen Abschnitt 79 auf. Mit dem plattenartigen Basisabschnitt 78 ist das Haltemodul 43 an der Dachstruktur 44 angebracht. Auch dient der plattenartige Basisabschnitt 78 abschnittsweise als eine Anlagefläche für die Unterseite 15 der Basiseinheit 3 des Bildschirmmoduls 1.

Der erhabene Abschnitt 79 ist von dem plattenartigen Basisabschnitt 78 vorstehend ausgebildet und umfasst unter anderem die Verriegelungsvorrichtung 48, die Kontaktstirnseite 47, den dritten Sammelstecker 12 und die separaten Anschlüsse 27 bis 31 sowie 34 und 35.

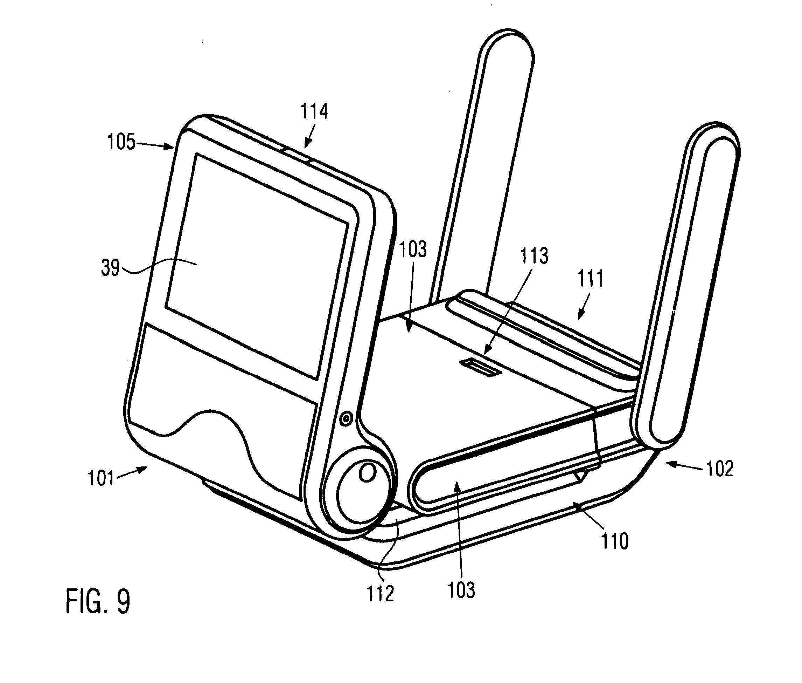

Figur 9 zeigt eine zweite Ausführungsform der Erfindung. Nachfolgend werden die Unterschiede der zweiten Ausführungsform gegenüber der ersten Ausführungsform erläutert.

In der zweiten Ausführungsform der Erfindung ist das Antennenmodul 102 integral mit einer Batterieeinheit 110 ausgebildet, welche sich unterseits an eine Grundeinheit 111 des Antennenmoduls 102 anschließt und eine Auflagefläche für eine Basiseinheit 103 des Bildschirmmoduls 101 ausbildet. Durch diesen Aufbau hat die Einheit aus Bildschirmmodul 101 und Antennenmodul 102 der zweiten Ausführungsform der Erfindung einen niedrigen Schwerpunkt und eine verlängerte Betriebsdauer.

Die Basiseinheit 103 weist eine Aussparung 113 auf. An der Anzeigeeinheit 105 ist ein tastsinnartig betätigbarer Verrastmechanismus 114 vorgesehen, welcher einen zu der Aussparung 113 korrespondierenden Rasthaken aufweist. Wird die Anzeigeeinheit an die Basiseinheit 103 herangeschwenkt, verrasten die Basiseinheit 103 und die Anzeigeeinheit 105 miteinander. Der verrastete Zustand kann durch Tastsinn des betätigen des Verrastmechanismus 114 aufgehoben werden.

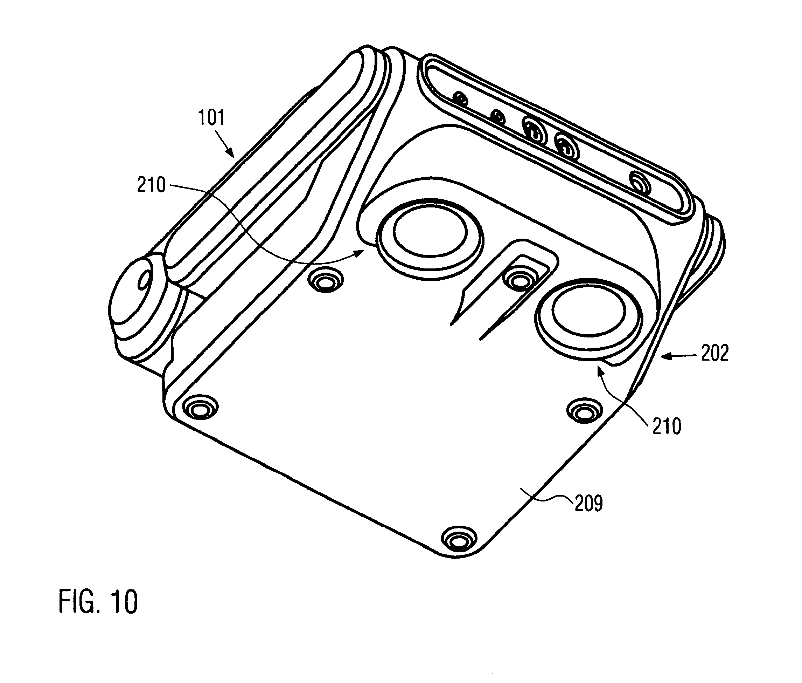

Figur 10 zeigt eine dritte Ausführungsform der erfindungsgemäßen Fahrzeug-Bildschirmeinrichtung. Nachfolgend werden die Unterschiede der dritten Ausführungsform gegenüber der zweiten Ausführungsform erläutert.

Das Antennenmodul 202 der dritten Ausführungsform der Erfindung weist an einer Unterseite 209 zwei von dieser Unterseite 209 abstrahlende Tieftonlautsprecher 210 auf.

Mit den Tieftonlautsprechem wird das Klangbild der Fahrzeug-Bildschirmeinrichtung im mobilen Betrieb im Tieftonbereich verbessert.

In einer Weiterbildung der Erfindung kann die Fahrzeug-Bildschirmeinrichtung mehrere Sammelanschlussmodule aufweisen, wie z.B. mehrere der aus der ersten bis dritten Ausführungsform bekannten Antennenmodule 2, 102, 202. Daraus ergeben sich mehrere mögliche gekoppelte Stellungen von Bildschirmmodul und einem Sammelanschlussmodul für den mobilen Einsatz der Fahrzeug-Bildschirmeinrichtung separat von einem Fahrzeug.

Alternativ kann das Haltemodul an einer beliebigen Struktur anbringbar sein, wodurch die Fahrzeug-Bildschirmeinrichtung unabhängig von einem Fahrzeug verwendbar ist, auch wenn sich das Bildschirmmodul und das Haltemodul in einer aneinander gekoppelten Stellung befinden.

## Patentansprüche

1. Fahrzeug-Bildschirmeinrichtung, welche baukastenartig ein Bildschirmmodul (1, 101), ein an einem Fahrzeug befestigbares Haltermodul (43) welches des Fahrzeug-Bildschirmeinrichtung für den fahrzeuggebundenen Betrieb die erforderlichen Haltefunktionen verleiht, und wobei das Bildschirmmodul (1, 101) in einer an das Haltemodul (43) gekoppelten Stellung (58) mit Bildschirmsignalen über das Haltemodul (43) versorgt wird **dadurch gekennzeichnet, daß** die Fahrzeugbildschirmeinrichtung wenigstens ein Sammelanschlussmodul (2, 102, 202) aufweist in einer an das Sammelanschlussmodul (2) gekoppelten, gemeinsam von dem Fahrzeug separierten Stellung (77) über das Sammelanschlussmodul (2, 102, 202) mit Bildschirmsignalen versorgt wird zur Nutzung der Fahrzeug-Bildschirmeinrichtung als ein vom Fahrzeug separates Bildanzeigegerät.

2. Fahrzeug-Bildschirmeinrichtung nach Anspruch 1,
**dadurch gekennzeichnet,**
**dass** das Sammelanschlussmodul als Antennenmodul (2, 102, 202) ausgebildet ist.

3. Fahrzeug-Bildschirmeinrichtung nach Anspruch 1 oder 2,
**dadurch gekennzeichnet,**
**dass** das Sammelanschlussmodul (2, 102, 202) einen Sammelstecker (11) und eine Anzahl separater Anschlüsse (27, 28, 29, 30, 31, 34, 35) aufweist, welche ausgehend von dem Sammelstecker (11) vereinzelt sind, wobei der Sammelstecker an einen Gegenstecker (10) des Bildschirmmoduls (1, 101) koppelbar ist.

4. Fahrzeug-Bildschirmeinrichtung nach wenigstens einem der vorhergehenden Ansprüche,
**dadurch gekennzeichnet,**
**dass** das Bildschirmmodul (1, 101) mit Hilfe des Haltemoduls (43) hängend an einer Fahrzeugstruktur (44) anbringbar ist.

5. Fahrzeug-Bildschirmeinrichtung nach wenigstens einem der vorhergehenden Ansprüche,
**dadurch gekennzeichnet,**
**dass** das Haltemodul (43) eine schienenartige Haltestruktur (45) aufweist, welche in einen Eingriff mit dem Bildschirmmodul (1, 101) bringbar ist, wobei das Bildschirmmodul (1, 101) an der Haltestruktur (45) gehalten wird.

6. Fahrzeug-Bildschirmeinrichtung nach wenigstens einem der vorhergehenden Ansprüche,
**dadurch gekennzeichnet,**
**dass** das Haltemodul (43) und/oder das Bildschirmmodul (1, 101) eine Verriegelungsvorrichtung (48) aufweist, mit welcher das Haltemodul (43) und das Bildschirmmodul in einer Koppelstellung (58) verriegelbar sind.

7. Fahrzeug-Bildschirmeinrichtung nach Anspruch 6,
**dadurch gekennzeichnet,**
**dass** das Haltemodul (43) und das Bildschirmmodul (1, 101) mit Hilfe der Verriegelungsvorrichtung (58) von einer Ausgangslage (63) in die endgültige Koppelstellung (58) bewegbar sind.

8. Fahrzeug-Bildschirmeinrichtung nach Anspruch 6 oder 7,
**dadurch gekennzeichnet,**
**dass** das Haltemodul (43) und das Bildschirmmodul (1, 101) mit Hilfe der Verriegelungsvorrichtung (48) von der Koppelstellung (58) in eine Ausgangslage (63) bewegbar sind, in welcher das Haltemodul (43) und das Bildschirmmodul (1, 101) voneinander lösbar sind.

9. Fahrzeug-Bildschirmeinrichtung nach wenigstens einem der Ansprüche 6 bis 8,
**dadurch gekennzeichnet,**
**dass** ein Bedienhebel (49) der Verriegelungsvorrichtung (48) in einer eingerückten Stellung (55) eine Außenkontur (59) des Bildschirmmoduls (1, 101) und/oder des Haltemoduls (43) integral fortsetzt.

10. Fahrzeug-Bildschirmeinrichtung nach wenigstens einem der Ansprüche 6 bis 9,
**dadurch gekennzeichnet,**
**dass** die Verriegelungsvorrichtung (48) einen Bedienhebel (49), einen Getriebemechanismus (62) und wenigstens einen Verriegelungshaken (52) aufweist, wobei eine Schwenkbewegung des Bedienhebels (49) durch den Getriebemechanismus (62) in eine schwenkende und translatorische Bewegung des Verriegelungshakens (52) umgesetzt wird.

11. Fahrzeug-Bildschirmeinrichtung nach Anspruch 10,
**dadurch gekennzeichnet,**
**dass** das mit dem Verriegelungshaken (52) lösbar in Eingriff bringbare Modul (1, 101) eine Zieh- (56) und eine Drück-Eingriffsstruktur (57) aufweist, wobei der Verriegelungshaken (52) mit der Zieh-Eingriffsstruktur (54) ziehend und mit der Drück-Eingriffsstruktur (57) drückend in Eingriff bringbar ist.

12. Fahrzeug-Bildschirmeinrichtung nach wenigstens einem der vorhergehenden Ansprüche,
**dadurch gekennzeichnet,**
**dass** das Bildschirmmodul (1, 101) eine Basiseinheit (3, 103) und eine daran über ein Gelenk (4) schwenkbar angebrachte Anzeigeeinheit (5, 105) aufweist, wobei an einer dem Gelenk (4) gegenüberliegenden Stirnseite (8) eine Koppelstelle (9) zum Koppeln des Bildschirmmoduls (1, 101) mit dem Haltemodul (43) oder dem Sammelanschlussmodul (1, 102, 202) ausgebildet ist.

13. Fahrzeug-Bildschirmeinrichtung nach wenigstens einem der vorhergehenden Ansprüche,
**dadurch gekennzeichnet,**
**dass** das Haltemodul (43) mit einer externen Antenne verbunden ist.

14. Fahrzeug-Bildschirmeinrichtung nach wenigstens einem der vorhergehenden Ansprüche,
**dadurch gekennzeichnet,**
**dass** das Sammelanschlussmodul (102) wenigstens einen Akkumulator aufweist.

15. Fahrzeug-Bildschirmeinrichtung nach wenigstens einem der vorhergehenden Ansprüche,
**dadurch gekennzeichnet,**
**dass** das Sammelanschlussmodul (202) wenigstens einen Lautsprecher aufweist.

## Claims

1. A vehicle image display device which includes in a modular manner an image display module (1, 101), a support module (43), which is fastenable to a vehicle and which imparts the necessary support functions to the image display device for operation when connected to the vehicle, wherein the image display module (1, 101) is supplied with image signals via the support module (43), when in a position (58) coupled to the retaining module (43), **characterised in that** the vehicle image display device includes at least one multiple connector module (2, 102, 202) and, in a position (77) coupled to the multiple connector module (2) and jointly separated from the vehicle, is supplied via the multiple connector module (2, 102, 202) with image signals in order to use the vehicle image display device as an image display device separate from the vehicle.

2. A vehicle image display device as claimed in Claim 1, **characterised in that** the multiple connector module is constructed in the form of an antenna module (2, 102, 202).

3. A vehicle image display device as claimed in Claim 1 or 2, **characterised in that** the multiple connector module (2, 102, 202) includes a multiple plug (11) and a number of separate connectors (27, 28, 29, 30, 31, 34, 35), which, starting from the multiple plug (11), are separated, whereby the multiple plug may be coupled to a complementary plug (10) of the image display module (1, 101).

4. A vehicle image display device as claimed in at least one of the preceding claims, **characterised in that** the image display module (1, 101) may be mounted suspended on a vehicle structure (44) with the aid of the support module (43).

5. A vehicle image display device as claimed in at least one of the preceding claims, **characterised in that** the support module (43) includes a track-like support structure (45), which is movable into engagement with the image display device (1, 101), whereby the image display module (1, 101) is supported on the support structure (45).

6. A vehicle image display device as claimed in at least one of the preceding claims, **characterised in that** the support module (43) and/or the image display module (1, 101) includes a locking device (48), with which the support module (43) and the image display module are lockable in a coupled position (58).

7. A vehicle image display device as claimed in Claim 6, **characterised in that** the support module (43) and the image display module (1, 101) are movable with the aid of the locking device (48) from a starting position (63) into the final coupled position (58).

8. A vehicle image display device as claimed in Claim 6 or 7, **characterised in that** the support module (43) and the image display module (1, 101) are movable with the aid of the locking device (48) from the coupled position (58) into a starting position (63), in which the support module (43) and the image display module (1, 101) are releasable from one another.

9. A vehicle image display device as claimed in at least one of Claims 6 to 8, **characterised in that** an operating lever (49) of the locking device (48) constitutes an integral continuation of an outer contour (59) of the image display module (1, 101) and/or of the retaining module (43), when in an engaged position (55).

10. A vehicle image display device as claimed in at least one of Claims 6 to 9, **characterised in that** the locking device (48) includes an operating lever (49), a transmission mechanism (62) and at least one locking hook (52), whereby a pivotable movement of the operating lever (49) is converted by the transmission mechanism into pivotal and translational movement of the locking hook (52).

11. A vehicle image display device as claimed in Claim 10, **characterised in that** the module (1, 101), which is movable releasably into engagement with the locking hook (52) includes a pulling (56) and a pushing (57) engagement structure, whereby the locking hook (52) is movable into pulling engagement with the pulling engagement structure (54) and into pushing engagement with the pushing engagement structure (57).

12. A vehicle image display device as claimed in at least one of the preceding claims, **characterised in that** the image display module (1, 101) includes a base unit (3, 103) and an indicating unit (5, 105) pivotably mounted thereon by means of a joint (4), whereby formed on an end face (8) opposite to the joint (4) there is a coupling point (9) for coupling the image display module (1, 101) to the support module (43) or the multiple connector module (1, 102, 202).

13. A vehicle image display device as claimed in at least one of the preceding claims, **characterised in that** the support module (43) is connected to an external antenna.

14. A vehicle image display device as claimed in at least one of the preceding claims, **characterised in that** the multiple connector module (102) includes at least one accumulator.

15. A vehicle image display device as claimed in at least one of the preceding claims, **characterised in that** the multiple connector module (202) includes at least one loud speaker.

## Revendications

1. Dispositif d'écran de véhicule, comportant de manière modulaire un module d'écran (1, 101), un module de maintien (43) fixable sur un véhicule donnant au dispositif d'écran de véhicule les fonctions de maintien exigées pour un fonctionnement dans le cadre du véhicule, et où le module d'écran (1, 101) reçoit des signaux d'écran via le module de maintien (43) dans une position (58) de couplage avec le module de maintien (43),
**caractérisé en ce que**
le dispositif d'écran de véhicule comprend au moins un module de connexion omnibus (2, 102, 202), et dans une position (77) de couplage avec le module de connexion omnibus (2), qui est séparée du véhicule, est alimenté en signaux d'écran via le module de connexion omnibus (2, 102, 202) pour l'exploitation du dispositif d'écran de véhicule en tant qu'appareil afficheur d'images séparé du véhicule.

2. Dispositif d'écran de véhicule selon la revendication 1,
**caractérisé en ce que**
le module de connexion omnibus est réalisé comme module d'antenne (2, 102, 202).

3. Dispositif d'écran de véhicule selon la revendication 1 ou 2,
**caractérisé en ce que**
le module de connexion omnibus (2, 102, 202) comprend une fiche omnibus (11) et un certain nombre de connexions séparées (27, 28, 29, 30, 31, 34, 35), individualisées depuis la fiche omnibus (11), la fiche omnibus pouvant être accouplée à une prise complémentaire (10) du module d'écran (1, 101).

4. Dispositif d'écran de véhicule selon au moins une des revendications précédentes,
**caractérisé en ce que**
le module d'écran (1, 101) est accrochable à une structure de véhicule (44) au moyen du module de maintien (43).

5. Dispositif d'écran de véhicule selon au moins une des revendications précédentes,
**caractérisé en ce que**
le module de maintien (43) comporte une structure de maintien (45) en forme de rail, laquelle peut être mise en contact d'engagement avec le module d'écran (1, 101), le module d'écran (1, 101) étant maintenu sur la structure de maintien (45).

6. Dispositif d'écran de véhicule selon au moins une des revendications précédentes,
**caractérisé en ce que**
le module de maintien (43) et/ou le module d'écran (1, 101) comportent un dispositif de verrouillage (48) au moyen duquel le module de maintien (43) et le module d'écran sont blocables dans une position de couplage (58).

7. Dispositif d'écran de véhicule selon la revendication 6,
**caractérisé en ce que**
le module de maintien (43) et le module d'écran (1, 101) sont déplaçables d'une position initiale (63) vers la position de couplage finale (58) au moyen du dispositif de verrouillage (48).

8. Dispositif d'écran de véhicule selon la revendication 6 ou 7,
**caractérisé en ce que**
le module de maintien (43) et le module d'écran (1, 101) sont déplaçables au moyen du dispositif de verrouillage (48) de la position de couplage (58) vers une position initiale (63) où le module de maintien (43) et le module d'écran (1, 101) sont détachables l'un de l'autre.

9. Dispositif d'écran de véhicule selon au moins une des revendications 6 à 8,
**caractérisé en ce qu'**
un levier d'actionnement (49) du dispositif de verrouillage (48) prolonge de manière intégrante à un contour extérieur (59) du module d'écran (1, 101) et/ou du module de maintien (43) dans une position rentrée (55).

10. Dispositif d'écran de véhicule selon au moins une des revendications 6 à 9,
**caractérisé en ce que**
le dispositif de verrouillage (48) comprend un levier d'actionnement (49), un mécanisme d'engrenage (62) et au moins un crochet de verrouillage (52), un pivotement du levier d'actionnement (49) par le mécanisme d'engrenage (62) étant converti en mouvement pivotant et translatoire du crochet de verrouillage (52).

11. Dispositif d'écran de véhicule selon la revendication 10,
**caractérisé en ce que**
le module (1, 101) pouvant être mis en contact d'engagement amovible avec le crochet de verrouillage (52) comporte une structure d'engagement par traction (56) et par pression (57), le crochet de verrouillage (52) pouvant être mis en contact d'engagement par traction avec la structure d'engagement par traction (56), et mis en contact d'engagement par pression avec la structure d'engagement par pression (57).

12. Dispositif d'écran de véhicule selon au moins une des revendications précédentes,
**caractérisé en ce que**
le module d'écran (1, 101) comprend une unité de base (3, 103) et une unité d'affichage (5, 105) montée de manière pivotante par l'intermédiaire d'une articulation (4), un point de couplage (9) pour le couplage du module d'écran (1, 101) avec le module de maintien (43) ou le module de connexion omnibus (2, 102, 202) étant prévu sur une face frontale (8) opposée à l'articulation (4).

13. Dispositif d'écran de véhicule selon au moins une des revendications précédentes,
**caractérisé en ce que**
le module de maintien (43) est relié à une antenne externe.

14. Dispositif d'écran de véhicule selon au moins une des revendications précédentes,
**caractérisé en ce que**
le module de connexion omnibus (102) comprend au moins un accumulateur.

15. Dispositif d'écran de véhicule selon au moins une des revendications précédentes,
**caractérisé en ce que**
le module de connexion omnibus (202) comprend au moins un haut-parleur.
